# FASCICULE DE BREVET EUROPEEN

(11) **EP 3 898 387 B1**
(45) Date de publication et mention de la délivrance du brevet: **28.12.2022**
(21) Numéro de dépôt: 19839343.1
(22) Date de dépôt: 22.11.2019
(51) Int. Cl.: B62D 25/04

(54) **DOUBLURE DE MONTANT DE BAIE COMPORTANT UNE NERVURE**
FENSTERSÄULENAUSKLEIDUNG MIT EINER RIPPE
WINDOW PILLAR LINER COMPRISING A RIB

(30) Priorité: 20.12.2018 FR 1873495
(43) Date de publication de la demande: 27.10.2021
(73) Titulaire: PSA Automobiles SA, 78300 Poissy (FR)
(72) Inventeur: BINAC, Jean Nicolas, 92400 COURBEVOIE (FR); SAINT DENIS, Lionel, 92290 CHATENAY MALABRY (FR); RIVIERRE, Laurent, 75015 PARIS (FR)
(86) Numéro de dépôt international: PCT/FR2019/052789
(87) Numéro de publication internationale: WO 2020/128180

(56) Documents cités:
- EP-A2- 1 764 287
- CN-U- 204 605 957
- CN-U- 206 466 025
- FR-B1- 2 808 760

## Description

### Domaine technique de l'invention

La présente invention revendique la priorité de la demande française 1873495 déposée le 20 décembre 2018

La présente invention concerne une doublure de montant de baie pour un véhicule automobile comportant une nervure assurant une double fonction de tenue de choc et d'évacuation d'un surplus de peinture après une opération de peinture de la doublure de montant de baie.

### Art antérieur

La résistance mécanique des éléments de carrosserie est un souci primordial des constructeurs automobiles. En dépit des progrès considérables qui ont marqué l'évolution récente des carrosseries automobiles, notamment sur le plan de la sécurité, la conception de ces éléments de carrosserie continue de faire l'objet de recherches intensives visant à en optimiser la résistance à poids constant.

La résistance des éléments de carrosserie est particulièrement importante pour répondre aux problématiques d'endommagements par choc que pourrait avoir à subir le véhicule automobile.

Pour ce faire, il peut être réalisé un épaississement de la doublure montant de baie et/ou la mise en place de nervures afin de raidir la doublure de montant de baie.

Dans le cas spécifique d'une doublure de montant de baie destinée à être solidarisée avec une traverse avant de pavillon par un gousset, le gousset reposant sur la doublure de montant de baie, il apparaît à la jonction du gousset avec la doublure de montant de baie un delta de raideur qui est souvent à l'origine d'un pli lors d'un choc frontal que subit le véhicule automobile.

De plus, des aménagements sont aussi à prévoir dans le gousset pour vider le surplus de cataphorèse qui s'accumule dans la zone de réception du gousset sur la doublure de montant de baie lors de la peinture du véhicule, notamment lors du passage du véhicule dans les bains de cataphorèse.

Or, dans le premier cas, mettre une nervure seule n'est parfois pas suffisant pour assurer le non pli de la doublure de montant de baie et un épaississement complémentaire de cette doublure est nécessaire.

Dans le deuxième cas, il est prévu un aménagement, parfois compliqué, à mettre en place sur le gousset pour assurer l'évacuation du surplus de cataphorèse, notamment par la mise en place d'un embouti en feuillure ou d'une pièce soudée entraînant cependant une difficulté d'implantation des points de soudure.

Le document FR-B1-2 808 760 décrit un assemblage élémentaire de carrosserie pour véhicule automobile comprenant un côté de caisse, une doublure d'arc pavillon, une doublure de montant de baie, et une traverse avant de pavillon.

Dans cet assemblage, le côté de caisse, la doublure d'arc pavillon et la doublure de montant de baie forment un corps creux se raccordant à la traverse avant de pavillon par une liaison nodale à trois branches. Un gousset assure la liaison nodale, ce gousset présentant une face externe qui se raccorde à une face interne de la doublure de montant de baie.

Dans ce document, la doublure de montant de baie ne présente pas de nervure effectuant un effet de renforcement de la doublure et il n'est pas suggéré que la présence d'une telle nervure pourrait augmenter la résistance mécanique de la doublure de montant de baie.

Inversement, le problème à la base de l'invention est, pour une doublure de montant de baie pour un véhicule automobile destinée à être solidarisée avec une traverse avant de pavillon par l'intermédiaire d'un gousset, de concevoir une zone de réception qui puisse à la fois présenter une raideur augmentée ainsi que se prêter à un écoulement de cataphorèse superflue hors de la doublure de montant de baie.

### Résumé de l'invention

A cet effet, la présente invention concerne une doublure de montant de baie de forme allongée incurvée présentant à une portion d'extrémité longitudinale une zone excavée destinée au positionnement d'un élément recouvrant la zone excavée, caractérisée en ce que la doublure de montant de baie porte une nervure s'étendant longitudinalement à la doublure de montant de baie sur une partie de la longueur de la doublure de montant de baie, la nervure débouchant dans la zone excavée.

La nervure mise en place sur la doublure de montant de baie permet d'apporter la raideur nécessaire à la tenue en choc frontal en permettant de ne pas avoir de pli à l'avant de l'élément recouvrant la zone excavée, avantageusement un gousset de traverse avant de pavillon. Ceci est obtenu sans avoir eu à épaissir la doublure de montant de baie.

Cela est dû au fait que la nervure est prolongée sous l'élément positionné sur la zone excavée, c'est-à-dire le gousset de traverse avant pavillon, et ne fait pas apparaître de perte de raideur.

De plus, cette nervure dont une partie se trouve dans la zone excavée permet d'effectuer une fonction supplémentaire en permettant d'évacuer un surplus de cataphorèse restant après un processus de peinture de la doublure du montant de baie avec les autres éléments de la carrosserie, avantageusement lors d'un processus de peinture par cataphorèse. Ceci est obtenu sans avoir à faire d'aménagement sur l'élément positionné sur la zone excavée, c'est-à-dire le gousset de traverse avant de pavillon.

La nervure mise en place sur la doublure de montant de pavillon effectue donc une double fonction, ce qui n'était pas le cas des nervures proposées par l'état de la technique.

Avantageusement, la nervure comporte un corps principal prolongé par une portion d'extrémité longitudinale dont la majeure partie s'étend dans la zone excavée, la portion d'extrémité longitudinale de la nervure étant recourbée d'un angle de 10 à 90° par rapport au corps médian.

Avantageusement, la portion d'extrémité longitudinale de la nervure est recourbée d'un angle de 45° par rapport au corps médian avec une plage de variation de +/- 20% autour de cet angle de 45°, la majeure partie de la portion d'extrémité longitudinale recourbée s'étendant dans la zone excavée étant de plus de 70% de la portion d'extrémité longitudinale recourbée.

Avantageusement, la portion d'extrémité longitudinale recourbée de la nervure est d'une longueur de 5 à 20 fois moins grande qu'une longueur du corps principal.

Avantageusement, la nervure présente une largeur constante comprise entre un quart de la longueur et une fois la longueur de la portion d'extrémité longitudinale recourbée de la nervure.

Avantageusement, le corps principal de la nervure est rectiligne ou incurvé similairement à la partie de la doublure de montant de baie portant la nervure.

La présente invention concerne aussi un ensemble d'une doublure de montant de baie et d'un gousset positionné et solidarisé localement sur la doublure de montant de baie, caractérisé en ce que la doublure de montant de baie est telle que précédemment décrite, le gousset étant l'élément recouvrant la zone excavée.

La mise en place de cette nervure prolongée sous le gousset de traverse avant de pavillon permet de ne pas faire apparaître de perte de raideur à l'avant du gousset de traverse avant de pavillon et d'empêcher la formation d'un pli lors d'un choc frontal.

De plus, l'utilisation d'une telle nervure prolongée sous le gousset permet de se passer d'une prise de masse en évitant d'augmenter l'épaisseur de la doublure montant de baie afin d'assurer la fonction contre le choc.

Encore, en tant que deuxième fonction de la nervure, cette nervure permet l'écoulement d'un surplus de cataphorèse par la nervure hors de la zone excavée qui pourrait contenir de la peinture après une opération de peinture de la carrosserie du véhicule automobile, notamment par cataphorèse.

Enfin, dans un tel ensemble, la conception du gousset de traverse avant de pavillon est simplifiée et son coût est diminué.

Avantageusement, le gousset est solidarisé avec la zone excavée par des moyens de solidarisation du type points de soudure, vis ou rivets.

Avantageusement, le gousset comporte des bords périphériques recourbés en appui sur un contour de la zone excavée.

La présente invention concerne enfin un assemblage de carrosserie pour véhicule automobile comprenant une doublure de montant de baie, une traverse avant de pavillon et un gousset reliant la traverse avant de pavillon à la doublure de montant de baie, caractérisé en ce que la doublure de montant de baie et le gousset forment un tel ensemble.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :

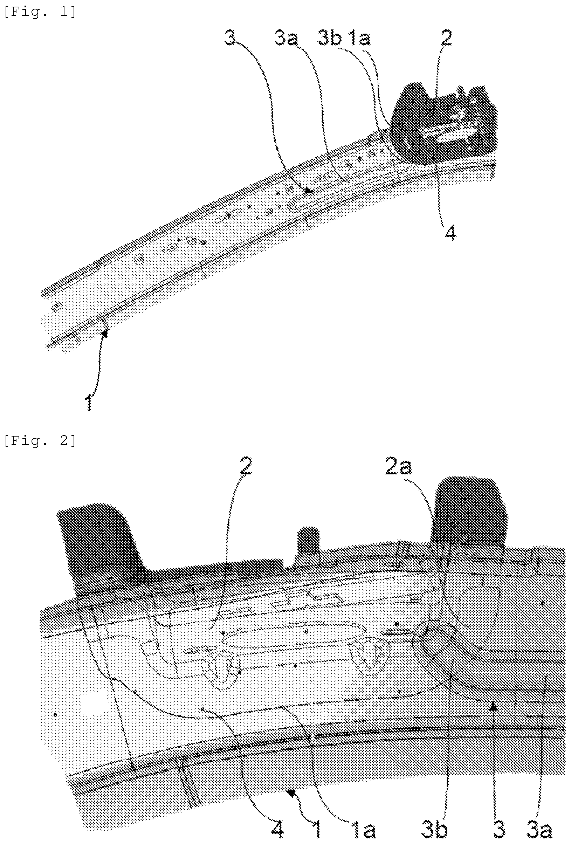

[Fig. 1] - la figure 1 est une représentation schématique d'une vue en perspective d'une doublure de montant de baie supportant par une zone excavée de réception un gousset destiné à solidariser la doublure de montant de baie à une traverse avant de pavillon, la doublure de montant de baie étant conforme à un mode de réalisation de la présente invention, une nervure étant partiellement visible à cette figure 1 à l'exception de sa portion positionnée sous le gousset,
[Fig. 2] - la figure 2 est une représentation schématique d'une vue en perspective d'une portion d'une doublure de montant de baie conforme à un mode de réalisation de la présente invention, et notamment de sa zone excavée supportant un gousset de traverse avant de pavillon, la doublure montant de baie étant rendue transparente pour voir la portion de la nervure positionnée sous le gousset dans la zone excavée.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

### Description détaillée de l'invention

En se référant aux figures 1 et 2, la présente invention concerne une doublure 1 de montant de baie de forme allongée incurvée présentant à une portion d'extrémité longitudinale 3b une zone excavée la destinée au positionnement d'un élément recouvrant la zone excavée la.

Cet élément est un gousset 2 de traverse avant de pavillon reliant la traverse avant de pavillon avec la doublure 1 de montant de baie, donc un élément extérieur à la doublure 1 de montant de baie.

Selon l'invention, la doublure 1 de montant de baie porte une nervure 3, partiellement visible à la figure 1 avec son extrémité longitudinale cachée par le gousset 2. La nervure 3 s'étend longitudinalement à la doublure 1 de montant de baie sur une partie de la longueur de la doublure 1 de montant de baie, la nervure 3 débouchant dans la zone excavée la par une de ses extrémités longitudinales.

Comme il peut être vu aux figures 1 et 2, la nervure 3 peut comporter un corps 3a principal prolongé par une portion d'extrémité longitudinale 3b dont la majeure partie s'étend dans la zone excavée la.

A la figure 1, seules sont visibles le corps 3a principal de la nervure 3 et une partie de la portion de l'extrémité longitudinale 3b adjacente au corps 3a principal et n'ayant pas pénétré dans la zone excavée la. A la figure 2, toute l'extrémité longitudinale de la nervure 3 en vis-à-vis de la zone excavée la est visible.

Comme il peut être le mieux vu à la figure 2, la portion d'extrémité longitudinale 3b de la nervure 3 est recourbée d'un angle de 10 à 90° par rapport au corps 3a médian.

La nervure 3 peut être de forme sortante vers l'élément ou gousset 2 en étant convexe.

Comme le mieux visible à la figure 2, la portion d'extrémité longitudinale 3b de la nervure 3 peut être recourbée d'un angle de 45° par rapport au corps 3a médian avec une plage de variation de +/- 20% autour de cet angle de 45°.

Seule une portion mineure de la portion d'extrémité longitudinale 3b recourbées peut se trouver en dehors de la zone excavée la, donc non recouverte par l'élément, c'est-à-dire avantageusement le gousset 2. La majeure partie de la portion d'extrémité longitudinale 3b recourbée peut s'étendre dans la zone excavée la et représenter plus de 70% de la portion d'extrémité longitudinale 3b recourbée.

Par contre, la portion d'extrémité longitudinale 3b recourbée présente une longueur plus petite que la longueur du corps 3a principal de la nervure 3.

En se référant aux figures 1 et 2, la portion d'extrémité longitudinale 3b recourbée de la nervure 3 peut être d'une longueur de 5 à 20 fois moins grande qu'une longueur du corps 3a principal de la nervure 3, avantageusement moins de 10 fois moins grande mais ceci n'est pas limitatif.

La nervure 3 peut présenter une largeur constante sur son corps 3a principal et sur sa portion d'extrémité longitudinale 3b recourbée. En se référant plus particulièrement à la figure 2, la largeur de la nervure 3 peut être comprise entre un quart de la longueur et une fois la longueur de la portion d'extrémité longitudinale 3b recourbée de la nervure 3.

Cette largeur doit être suffisante pour permette un écoulement de peinture en son intérieur sans débordement. La nervure 3, de forme convexe, peut être fermée sur une face de la doublure 1 de montant de baie qui fait face à l'élément ou au gousset 2.

Comme visible à la figure 1, le corps 3a principal de la nervure 3 peut être rectiligne. En alternative, le corps 3a principal de la nervure 3 peut être incurvé similairement à la partie de la doublure 1 de montant de baie portant la nervure 3. A la figure 1, la partie de la doublure 1 de montant de baie portant la nervure 3 est faiblement incurvée et le corps 3a principal et sa partie de doublure 1 supportant le corps 3a sont sensiblement rectilignes.

La présente invention concerne aussi un ensemble d'une doublure 1 de montant de baie et d'un gousset 2 positionné et solidarisé localement sur la doublure 1 de montant de baie.

La doublure 1 de montant de baie est telle que précédemment décrite, le gousset 2 étant l'élément recouvrant la zone excavée la.

Le gousset 2 sert à la solidarisation de la doublure 1 de montant de baie avec une traverse avant de pavillon, le gousset 2 étant solidarisé, d'un côté, avec la doublure 1 de montant de baie et, d'un autre côté, avec la traverse avant de pavillon, non montrée aux figures.

Le gousset 2 peut être solidarisé avec la zone excavée la par des moyens de solidarisation du type points de soudure, vis ou rivets. A la figure 2, il est montré huit points de fixation 4 mais ceci n'est pas limitatif et un seul point de fixation est référencé 4 et cette référence est prise aussi dans la description pour désigner un moyen de solidarisation mais ce qui est énoncé pour ce point de fixation référencé 4 l'est pour tous les autres points.

Le gousset 2 peut comporter des bords périphériques recourbés 2a en appui sur un contour de la zone excavée la.

La présente invention concerne enfin un assemblage de carrosserie pour véhicule automobile comprenant une doublure 1 de montant de baie, une traverse avant de pavillon et un gousset 2 reliant la traverse avant de pavillon à la doublure 1 de montant de baie, la traverse avant n'étant pas montrée aux figures mais pouvant prolonger le gousset 2 dans une direction sensiblement perpendiculaire à la doublure 1 de montant de baie.

La doublure 1 de montant de baie et le gousset 2 forment alors un ensemble tel que décrit précédemment.

L'invention n'est nullement limitée aux modes de réalisation décrits et illustrés qui n'ont été donnés qu'à titre d'exemples.

## Revendications

1. Doublure (1) de montant de baie de forme allongée incurvée présentant à une portion d'extrémité longitudinale (3b) une zone excavée (1a) destinée au positionnement d'un élément (2) recouvrant la zone excavée (la), **caractérisée en ce que** la doublure (1) de montant de baie porte une nervure (3) s'étendant longitudinalement à la doublure (1) de montant de baie sur une partie de la longueur de la doublure (1) de montant de baie, la nervure (3) débouchant dans la zone excavée (1a).

2. Doublure (1) de montant de baie selon la revendication 1, dans laquelle la nervure (3) comporte un corps (3a) principal prolongé par une portion d'extrémité longitudinale (3b) dont la majeure partie s'étend dans la zone excavée (la), la portion d'extrémité longitudinale (3b) de la nervure (3) étant recourbée d'un angle de 10 à 90° par rapport au corps (3a) médian.

3. Doublure (1) de montant de baie selon la revendication 2, dans laquelle la portion d'extrémité longitudinale (3b) de la nervure (3) est recourbée d'un angle de 45° par rapport au corps (3a) médian avec une plage de variation de +/-20% autour de cet angle de 45°, la majeure partie de la portion d'extrémité longitudinale (3b) recourbée s'étendant dans la zone excavée (1a) étant de plus de 70% de la portion d'extrémité longitudinale (3b) recourbée.

4. Doublure (1) de montant de baie selon l'une quelconque des revendications 2 ou 3, dans laquelle la portion d'extrémité longitudinale (3b) recourbée de la nervure (3) est d'une longueur de 5 à 20 fois moins grande qu'une longueur du corps (3a) principal.

5. Doublure (1) de montant de baie selon l'une quelconque des revendications 2 à 4, dans laquelle la nervure (3) présente une largeur constante comprise entre un quart de la longueur et une fois la longueur de la portion d'extrémité longitudinale (3b) recourbée de la nervure (3).

6. Doublure (1) de montant de baie selon l'une quelconque des revendications 2 à 5, dans laquelle le corps (3a) principal de la nervure (3) est rectiligne ou incurvé similairement à la partie de la doublure (1) de montant de baie portant la nervure (3).

7. Ensemble d'une doublure (1) de montant de baie et d'un gousset (2) positionné et solidarisé localement sur la doublure (1) de montant de baie, **caractérisé en ce que** la doublure (1) de montant de baie est selon l'une quelconque des revendications précédentes, le gousset (2) étant l'élément recouvrant la zone excavée (1a).

8. Ensemble selon la revendication précédente, dans lequel le gousset (2) est solidarisé avec la zone excavée (1a) par des moyens de solidarisation (4) du type points de soudure, vis ou rivets.

9. Ensemble selon l'une quelconque des deux revendications précédentes, dans lequel le gousset (2) comporte des bords périphériques recourbés (2a) en appui sur un contour de la zone excavée (1a).

10. Assemblage de carrosserie pour véhicule automobile comprenant une doublure (1) de montant de baie, une traverse avant de pavillon et un gousset (2) reliant la traverse avant de pavillon à la doublure (1) de montant de baie, **caractérisé en ce que** la doublure (1) de montant de baie et le gousset (2) forment un ensemble selon l'une quelconque des trois revendications précédentes.

## Patentansprüche

1. Gekrümmte längliche Rahmenholmeinlage (1), die an einem Längsendabschnitt (3b) einen ausgehöhlten Bereich (1a) zur Positionierung eines den ausgehöhlten Bereich (1a) abdeckenden Elements (2) aufweist, **dadurch gekennzeichnet, dass** die Rahmenholmeinlage (1) eine sich über einen Teil der Länge der Rahmenholmeinlage (1) längs zur Rahmenholmeinlage (1) erstreckende Rippe (3) trägt, wobei die Rippe (3) in den ausgehöhlten Bereich (1a) mündet.

2. Futter (1) für einen Rahmenschenkel nach Anspruch 1, bei dem die Rippe (3) einen Hauptkörper (3a) aufweist, der durch einen Längsendabschnitt (3b) verlängert ist, von dem sich der größte Teil in den ausgehöhlten Bereich (1a) erstreckt, wobei der Längsendabschnitt (3b) der Rippe (3) in einem Winkel von 10 bis 90° in Bezug auf den Mittelkörper (3a) gebogen ist.

3. Rahmenverkleidung (1) nach Anspruch 2, bei der der Längsendabschnitt (3b) der Rippe (3) um einen Winkel von 45° in Bezug auf den Mittelkörper (3a) mit einem Variationsbereich von +/- 20% um diesen Winkel von 45° gebogen ist, wobei der größte Teil des gebogenen Längsendabschnitts (3b), der sich in den ausgehöhlten Bereich (1a) erstreckt, mehr als 70% des gebogenen Längsendabschnitts (3b) beträgt.

4. Futter (1) für einen Rahmenschenkel nach einem der Ansprüche 2 oder 3, bei dem der gebogene Längsendabschnitt (3b) der Rippe (3) eine Länge von 5 bis 20 mal kleiner als eine Länge des Hauptkörpers (3a) aufweist.

5. Futter (1) für einen Rahmenschenkel nach einem der Ansprüche 2 bis 4, bei dem die Rippe (3) eine konstante Breite zwischen einem Viertel der Länge und dem Mal der Länge des gebogenen Längsendabschnitts (3b) der Rippe (3) aufweist.

6. Fach (1) für einen Rahmenschenkel nach einem der Ansprüche 2 bis 5, bei dem der Hauptkörper (3a) der Rippe (3) geradlinig oder ähnlich zu dem Abschnitt des Futters (1) für den Rahmenschenkel, der die Rippe (3) trägt, gekrümmt ist.

7. Einheit aus einem Futter (1) für einen Rahmenschenkel und einem Eckblech (2), das lokal auf dem Futter (1) für den Rahmenschenkel positioniert und befestigt ist, **dadurch gekennzeichnet, dass** das Futter (1) für den Rahmenschenkel gemäß einem der vorhergehenden Ansprüche ist, wobei das Eckblech (2) das Element ist, das den ausgehöhlten Bereich (1a) abdeckt.

8. Anordnung nach dem vorhergehenden Anspruch, bei der der Knotenpunkt (2) mit dem ausgegrabenen Bereich (1a) durch Verbindungsmittel (4) wie Schweißpunkte, Schrauben oder Nieten fest verbunden ist.

9. Anordnung nach einem der beiden vorhergehenden Ansprüche, bei der der Knotenpunkt (2) gekrümmte Umfangsränder (2a) aufweist, die an einer Kontur des ausgehöhlten Bereichs (1a) anliegen.

10. Kraftfahrzeugkarosseriebaugruppe mit einem Rahmenschenkelfutter (1), einem Dachsenkvorderquerträger und einem den Dachsenkvorderquerträger mit dem Rahmenschenkelfutter (1) verbindenden Knotenblech (2), **dadurch gekennzeichnet, dass** das Rahmenschenkelfutter (1) und der Knotenblech (2) eine Baugruppe nach einem der drei vorhergehenden Ansprüche bilden.

## Claims

1. A curved elongated bay post lining (1) having at a longitudinal end portion (3b) an excavated region (1a) for positioning an element (2) covering the excavated region (1a), **characterized in that** the bay post lining (1) carries a rib (3) extending longitudinally to the bay post lining (1) over a part of the length of the bay post lining (1), the rib (3) opening into the excavated region (1a).

2. A bay post liner (1) according to claim 1, wherein the rib (3) has a main body (3a) extended by a longitudinal end portion (3b) the major part of which extends into the excavated area (1a), the longitudinal end portion (3b) of the rib (3) being bent at an angle of 10 to 90° with respect to the middle body (3a).

3. A bay post lining (1) according to claim 2, wherein the longitudinal end portion (3b) of the rib (3) is bent at an angle of 45° with respect to the median body (3a) with a range of +/- 20% variation around this angle of 45°, the major part of the bent longitudinal end portion (3b) extending into the excavated area (1a) being more than 70% of the bent longitudinal end portion (3b).

4. A bay post lining (1) according to any one of claims 2 or 3, wherein the curved longitudinal end portion (3b) of the rib (3) is 5 to 20 times shorter than a length of the main body (3a).

5. A bay post lining (1) according to any one of claims 2 to 4, wherein the rib (3) has a constant width between one quarter of the length and once the length of the curved longitudinal end portion (3b) of the rib (3) .

6. A bay post lining (1) according to any one of claims 2 to 5, wherein the main body (3a) of the rib (3) is rectilinear or curved similar to the portion of the bay post lining (1) carrying the rib (3).

7. Assembly of a bay post lining (1) and a gusset (2) positioned and fastened locally on the bay post lining (1), **characterized in that** the bay post lining (1) is according to any one of the preceding claims, the gusset (2) being the element covering the excavated area (1a).

8. Assembly according to the preceding claim, in which the gusset (2) is secured to the excavated zone (1a) by securing means (4) of the type of welding points, screws or rivets.

9. Assembly according to any one of the two preceding claims, in which the gusset (2) has curved peripheral edges (2a) bearing on a contour of the excavated zone (1a).

10. A body assembly for a motor vehicle comprising a bay post lining (1), a headliner and a gusset (2) connecting the headliner to the bay post lining (1), **characterized in that** the bay post lining (1) and the gusset (2) form an assembly according to any one of the three preceding claims.
